# EUROPÄISCHE PATENTSCHRIFT

(11) **EP 2 135 346 B1**
(45) Veröffentlichungstag und Bekanntmachung des Hinweises auf die Patenterteilung: **15.11.2017**
(21) Anmeldenummer: 08716123.8
(22) Anmeldetag: 29.02.2008
(51) Int. Cl.: H02M 3/158

(54) **STROMSYMMETRIERUNGSSCHALTUNG UND VERFAHREN ZUR SYMMETRIERUNG DER PHASENSTRÖME FÜR EIN MEHRPHASIGES DC-DC-WANDLERSYSTEM**
CURRENT BALANCING CIRCUIT, AND METHOD FOR BALANCING THE PHASE CURRENTS FOR A MULTIPHASE DC-DC CONVERTER SYSTEM
CIRCUIT D'ÉQUILIBRAGE DE COURANT, ET PROCÉDÉ D'ÉQUILIBRAGE DE COURANTS DE PHASE POUR SYSTÈME CONVERTISSEUR CC-CC POLYPHASÉ

(30) Priorität: 06.03.2007 DE 102007010819
(43) Veröffentlichungstag der Anmeldung: 23.12.2009
(73) Patentinhaber: AUDI AG, 85045 Ingolstadt (DE)
(72) Erfinder: STADLER, Michael, 85110 Arnsberg (DE); PFORR, Johannes, 80995 München (DE)
(74) Vertreter: Mader, Wilfried
(86) Internationale Anmeldenummer: PCT/EP2008/001599
(87) Internationale Veröffentlichungsnummer: WO 2008/107119

(56) Entgegenhaltungen:
- WO-A-2006/109329
- US-A1- 2005 073 288
- STADLER M ET AL: "Zero-Voltage Switched Multi-Phase Converter utilizing nonlinear and coupled Inductors" APPLIED POWER ELECTRONICS CONFERENCE, APEC 2007 - TWENTY SECOND ANNUAL IEEE, IEEE, PI, 1. Februar 2007 (2007-02-01), Seiten 1038-1042, XP031085338 ISBN: 978-1-4244-0713-2

## Beschreibung

Die vorliegende Erfindung betrifft eine Stromsymmetrierungsschaltung für ein mehrphasiges DC-DC-Wandlersystem mit jeweils einem Tiefpassfilter für jede Phase des Wandlersystems zur Filterung einer mit dieser Phase korrelierten Spannung, wobei jeder Tiefpassfilter mindestens einen Kondensator aufweist, sowie ein entsprechendes Verfahren zur Symmetrierung der Phasenströme eines mehrphasigen DC-DC-Wandlersystems.

DC-DC-Wandler werden verwendet, um eine Ausgangsgleichspannung in gewünschter Höhe zur Verfügung zu stellen. Im einfachsten Fall ist eine Schalteinrichtung vorgesehen, die eine Verbindung zu einer Gleichspannungsquelle herstellt oder unterbricht, wobei das Tastverhältnis der Schalteinrichtung die Höhe der Ausgangsspannung bestimmt. Mittels einer mit der Schalteinrichtung verbundenen Induktivität kann die Spannung gefiltert werden, um eine Gleichspannung zu erzeugen. Zum Erzielen hoher Leistungen werden bevorzugt mehrphasige Wandler aus mehreren parallel geschalteten Einheiten, die phasenverschoben angesteuert werden, verwendet, da dadurch eine Reduzierung der benötigten Filterbauelemente ermöglicht wird. Bei solchen mehrphasigen Wandlern tritt nun das Problem auf, dass aufgrund von Bauteiltoleranzen auch bei gleicher Pulsweite des Ansteuersignals sich eine unsymmetrische Stromverteilung auf die einzelnen Phasen ergeben kann. Dies ist jedoch unerwünscht, da zum einen die Verluste aufgrund des ohmschen Widerstands des Wandlers steigen und sich der Wirkungsgrad des Wandlers dadurch verschlechtert. Außerdem können aufgrund des ungleich verteilten Phasenstroms einzelne Induktivitäten infolge eines zu hohen Phasenstroms sättigen, was zu einer Verminderung der maximalen Leistung des Wandlers führt. Deshalb ist bei mehrphasigen Wandlersystemen eine Stromsymmetrierung erforderlich.

Es ist bekannt, eine solche Stromsymmetrierung durch eine konventionelle Stromregelung zu verwirklichen. Dazu wird der Strom einer Phase durch Messung des Spannungsabfalls über einen Messwiderstand gemessen und berechnet. Die Dynamik dieser Regelung ist jedoch abhängig von der angeschlossenen Induktivität des DC-DC-Wandlers. Diese Abhängigkeit verschlechtert die Dynamik der Stromregelung. Ein zusätzlicher Nachteil dieses Konzepts ist die Notwendigkeit der Messung des Stroms.

Eine weitere Möglichkeit, eine Stromsymmetrierung herbeizuführen, besteht darin, die Spannung der einzelnen Phasen zu regeln. Hierbei wird die Ausgangsspannung der einzelnen Einheiten des DC-DC-Wandlers durch einen Filter gemessen, mit einem Sollwert verglichen und die entsprechende Stellgröße berechnet. Eine solche Stromsymmetrierung ist beispielsweise in der US 6 292 378 B1 beschrieben. Die dort offenbarte Schaltung stellt ein mehrphasiges Wandlersystem dar, wobei jede Phase eine aus zwei Schaltern bestehende Halbbrücke umfasst, an die eine Induktivität angeschlossen ist, und jede Phase mit einer eigenen Spannungsquelle verbunden ist. Die Ausgangsspannung der Halbbrücke wird mittels eines aus einem Widerstand und einem gegen Masse geschalteten Kondensator bestehenden Tiefpassfilters gefiltert. Die gefilterte Spannung wird in eine Steuerschaltung eingegeben, wo sie mit der gefilterten Spannung einer ausgewählten Phase als Referenzspannung verglichen wird.

Eine auf einer Regelung der Spannungen der einzelnen Phasen beruhende Stromsymmetrierung hat jedoch den Nachteil, dass bei einer sprunghaften Änderung der gewünschten Ausgangsspannung und einer damit einhergehenden sprunghaften Änderung der Aussteuerung der Phasen die einzelnen Kondensatoren des Messfilters auf die neuen Mittelwerte der Spannungen der einzelnen Phasen umgeladen werden müssen, da sich der Mittelwert der Phasenspannung gegen Masse ändert. Die Dynamik der Spannungsregelung ist somit direkt abhängig von den Zeitkonstanten der Filterung. Die Bauteiltoleranzen der verwendeten Kondensatoren können zu Differenzen beim Umladevorgang der Kondensatoren führen, welche nicht vernachlässigt werden können.

Aus der US 2005/0073288 A1 ist ein kaskadierbarer Leistungsregulator und/oder ein Multiphasen-DC-DC Konverter bekannt. Der Leistungsregulator mit mehreren Kanälen ist dazu ausgestaltet, jeden dieser Kanäle unabhängig zu steuern und dadurch eine Last gleichmäßig zu verteilen, wobei für das Steuern der Stromverteilung jeder der Kanäle mit jeweiligen Stromsensoren ausgestattet ist.

Aus der WO 2006/109329 A1 ist eine Schaltung für ein mehrphasiges DC-DC-Wandlersystem bekannt. Dabei ist für jede Phase ein System aus einem ohmschen Widerstand und einer Kapazität bereitgestellt. Der Strom jeder Phase trägt dazu bei, eine gemeinsame Last zu versorgen.

Es ist daher die Aufgabe der vorliegenden Erfindung, eine Stromsymmetrierungsschaltung sowie ein Verfahren zur Symmetrierung der Phasenströme für ein mehrphasiges DC-DC-Wandlersystem zu schaffen, womit eine besonders präzise Stromsymmetrierung ermöglicht wird.

Diese Aufgabe wird gelöst durch eine Stromsymmetrierungsschaltung für ein mehrphasiges DC-DC-Wandlersystem mit den Merkmalen des Patentanspruchs 1 und durch ein Verfahren zur Symmetrierung der Phasenströme eines mehrphasigen DC-DC-Wandlersystems mit den Schritten des Patentanspruchs 9. Vorteilhafte Ausführungsformen sind in den abhängigen Ansprüchen definiert. Bei der erfindungsgemäßen Stromsymmetrierungsschaltung ist jeweils eine Elektrode eines jeden Kondensators mit einem gemeinsamen von Masse entkoppelten Sternpunkt verbunden, um jeweils eine Differenz der Spannung der jeweiligen Phase und einer an dem Sternpunkt anliegenden variablen Bezugsspannung zu filtern und die gefilterte Spannung für eine Stromsymmetrieregelung des DC-DC-Wandlersystems zur Verfügung zu stellen.

Der Erfindung liegt die Erkenntnis zugrunde, dass sich der Einfluss von Bauteiltoleranzen reduzieren lässt, wenn man statt der Filterung der absoluten Spannungen der einzelnen Phasen die Differenzen dieser Phasenspannungen direkt filtert. Dies wird dadurch ermöglicht, dass, statt sie gegen Masse zu schalten, die Kondensatoren der Tiefpassfilter mit einem gemeinsamen Sternpunkt verbunden werden, an dem ein aus den Spannungen der einzelnen Phasen gebildeter Summenwert anliegt. Dadurch müssen die Kondensatoren bei einer sprunghaften Änderung der Sollspannung nicht umgeladen werden, und die Gesamtdynamik wird nicht durch Bauteiltoleranzen beeinflusst.

Gemäß der Erfindung weist die Stromsymmetrierungsschaltung Mittel zum Erzeugen eines Differenzsignals zumindest für jede Phase außer einer vorbestimmten Phase auf, dessen Wert zu der Differenz der mittleren Spannung der jeweiligen Phase und einer mittleren Spannung der vorbestimmten Phase proportional ist. Indem die mittlere Spannung einer Phase als Referenzwert gewählt wird, kann auf eine Stromsymmetrieregelung für diese Phase verzichtet werden.

Vorzugsweise handelt es sich bei der variablen Bezugsspannung um einen aus den Spannungen der einzelnen Phasen gebildeten Summenwert.

Gemäß einer nicht beanspruchten Ausführungsform weist die Stromsymmetrierungsschaltung alternativ Mittel zum Erzeugen eines Differenzsignals für jede Phase auf, dessen Wert zu der Differenz der mittleren Spannung der jeweiligen Phase und dem aus den Spannungen der einzelnen Phasen gebildeten Summenwert proportional ist.

Gemäß einer besonders bevorzugten Ausführungsform der Erfindung weist die Stromsymmetrierungsschaltung ferner Mittel zum Addieren des Differenzsignals der jeweiligen Phase zu einem Stellsignal des DC-DC-Wandlersystems für jede Phase des Wandlersystems, für die ein Differenzsignal vorliegt, auf.

Besonders einfach lassen sich die verwendeten Tiefpassfilter jeweils durch einen Tiefpassfilter erster Ordnung, insbesondere ein RC-Glied, realisieren.

Vorzugsweise weist ein DC-DC-Wandler mit einer erfindungsgemäßen Stromsymmetrierungsschaltung für jede Phase eine Schalteinrichtung zum Variieren der DC-DC-Eingangsspannung auf, wobei die einzelnen Schalteinrichtungen parallel zueinander geschaltet sind und jeweils ein Tiefpassfilter der Stromsymmetrierungsschaltung an eine Schalteinrichtung angeschlossen ist.

Besonders bevorzugt handelt sich bei der Schalteinrichtung um eine Halbbrücke, und der DC-DC-Wandler weist außerdem für jede Phase eine Induktivität auf, die an einen Ausgang der jeweiligen Halbbrücke angeschlossen ist. Durch die Verwendung von Halbbrücken, wobei eine Halbbrücke zwei Halbleiterschalter, insbesondere MOSFETs, umfasst, kann der DC-DC-Wandler als bidirektionaler Aufwärts-/Abwärtswandler betrieben werden.

Es ist weiterhin besonders bevorzugt, dass die Induktivitäten der einzelnen Phasen miteinander gekoppelt sind. Hierzu wird für jede Phase ein Wicklungspaket mit gleicher Windungszahl und gleichem Wicklungssinn verwendet. Dadurch heben sich die magnetischen Flüsse aufgrund des Gleichanteils der Phasenströme gegenseitig auf, solange die Gleichanteile der Phasenströme gleich groß sind. Der Kern der Induktivitäten muss nur noch für die maximal auftretende Wechselflussamplitude ausgelegt werden, die gegenüber den Gleichanteilen des magnetischen Flusses klein ist. Dies führt zu einer Reduzierung des benötigten Querschnitts des Kernmaterials und damit zu einer Reduzierung des benötigten Kernmaterials. Allerdings führen bei der Verwendung von gekoppelten Induktivitäten bereits geringe Differenzströme zur Sättigung des Kernmaterials, was eine besonders präzise Stromsymmetrierung erforderlich macht.

Gemäß einer besonders bevorzugten Ausführungsform der Erfindung weist der DC-DC-Wandler außerdem eine Steuereinrichtung zur Ansteuerung der Schalteinrichtungen in Abhängigkeit von einem mittels der gefilterten Spannung modifizierten Stellsignal auf.

Die im Vorhergehenden am Beispiel der erfindungsgemäßen Vorrichtung dargestellten Vorteile der Erfindung gelten selbstverständlich auch für das erfindungsgemäße Verfahren.

Die Erfindung wird im Folgenden anhand der in der Zeichnung dargestellten Figuren, die Ausführungsbeispiele der vorliegenden Erfindung darstellen, näher erläutert. Es zeigen:
- Fig. 1: ein bevorzugtes Ausführungsbeispiel einer erfindungsgemäßen Stromsymmetrierungsschaltung für einen dreiphasigen DC-DC-Wandler und
- Fig. 2: ein weiteres bevorzugtes Ausführungsbeispiel einer erfindungsgemäßen Stromsymmetrierungsschaltung für einen dreiphasigen DC-DC-Wandler.

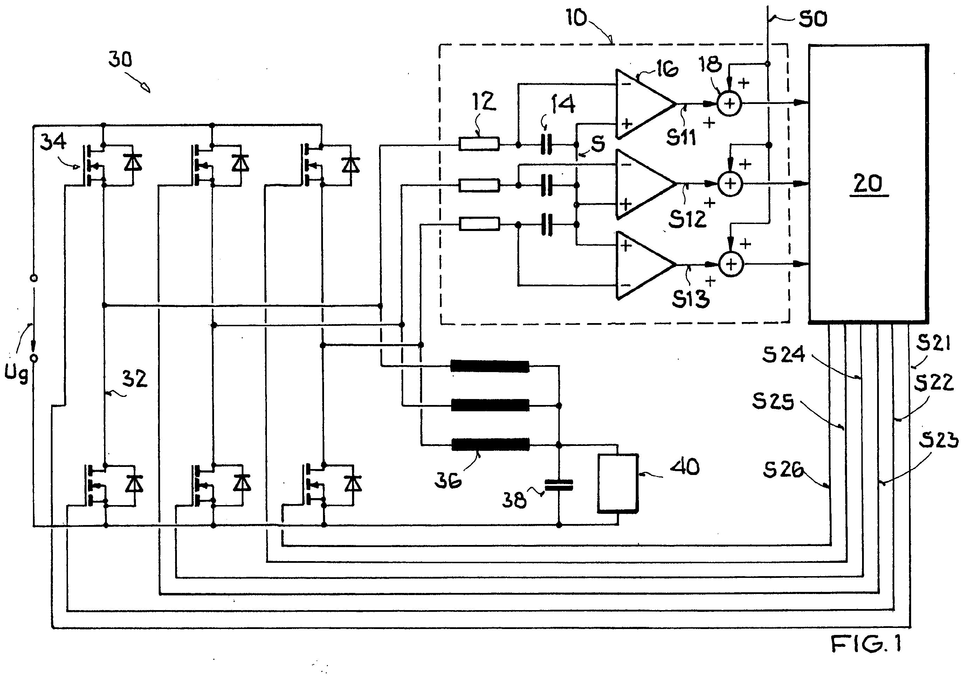

Fig. 1 zeigt einen dreiphasigen DC-DC-Wandler 30 mit einer Stromsymmetrierungsschaltung 10 gemäß einem ersten bevorzugten Ausführungsbeispiel der Erfindung. Wenn die Erfindung auch anhand eines dreiphasigen Wandlers beschrieben wird, so ist sie genauso auf Wandler mit einer anderen Anzahl an Phasen anwendbar. Gleiche oder entsprechende Elemente sind in den Figuren mit denselben Bezugszeichen bezeichnet. Bei dem dargestellten Wandler 30 handelt es sich um einen bidirektionalen Aufwärts-/Abwärtswandler, wobei der Wandler bei seinem Betrieb als Aufwärtswandler einen weiten Ausgangsspannungsbereich abdecken kann. Ein solcher Wandler kommt beispielsweise in einem der Energienetzstabilisierung dienenden Rekuperationssystem eines Kraftfahrzeugs zum Einsatz. Die erfindungsgemäße Stromsymmetrierung 10 ist aber ebenso auf unidirektionale Wandler und Wandler mit einem festen Spannungsübersetzungsverhältnis anwendbar.

Der DC-DC-Wandler 30 weist drei parallel geschaltete Halbbrücken 32 auf, eine für jede Phase. Die Halbbrücken 32 umfassen jeweils zwei Schalter 34, von denen ein Schalter 34 mit Masse und der andere Schalter 34 mit einer Eingangsgleichspannung verbunden ist. Bei dem bevorzugten Ausführungsbeispiel der Erfindung sind die Schalter 34 durch MOSFETs realisiert. Es lassen sich aber genau so gut andere Halbleiterschalter verwenden oder, im Falle eines unidirektionalen Wandlers, ein Schalter und eine Diode. Der DC-DC-Wandler 30 weist ferner für jede Phase eine Induktivität 36 auf, die auf der einen Seite mit dem Ausgang der jeweiligen Halbbrücke 32 verbunden ist. Auf der anderen Seite sind die Induktivitäten 36 der einzelnen Phasen miteinander verbunden und über einen Kondensator 38 gegen Masse geschaltet. Der Kondensator 38 bildet den Ausgang des Wandlers 30, an dem eine Last 40 anliegt. Weiterhin ist eine Steuereinrichtung 20 vorgesehen, die in Abhängigkeit von einem mittels der Stromsymmetrierungsschaltung 10 modifizierten Stellsignal Steuersignale S21 bis S26 für die Ansteuerung der MOSFETs 34 ausgibt.

Die Stromsymmetrierungsschaltung 10 gemäß Fig. 1 umfasst für jede Phase einen aus einem Widerstand 12 und einem Kondensator 14 bestehenden Tiefpassfilter. Der Eingang jedes Tiefpassfilters ist mit dem Ausgang der Halbbrücke 32 der jeweiligen Phase verbunden, während die dem jeweiligen Widerstand 12 abgewandten Elektroden der Kondensatoren 14 zu einem gemeinsamen Sternpunkt S zusammengeführt sind. Dadurch wird erreicht, dass die Tiefpassfilter jeweils eine Differenz der Halbbrückenausgangsspannungen und eines am Sternpunkt S anliegenden Summenwerts der Halbbrückenausgangsspannungen filtern. Um die gefilterte Spannung zu erfassen, ist gemäß dem bevorzugten Ausführungsbeispiel der Erfindung ein Operationsverstärker 16 für jede Phase vorgesehen, an dessen invertierendem Eingang die gemittelte Spannung der jeweiligen Phase und an dessen nicht invertierendem Eingang die sich am Sternpunkt S einstellende Bezugsspannung anliegt. So erzeugt jeder Operationsverstärker 16 ein Differenzsignal S11, S12 und S13, das ein Maß für die Differenz der mittleren Ausgangsspannung der jeweiligen Halbbrücke und den am Sternpunkt S anliegenden Summenwert der Halbbrückenausgangsspannungen darstellt. Schließlich ist für jede Phase noch eine Additionsschaltung 18 vorgesehen, die dazu dient, das jeweilige Differenzsignal S11, S12 oder S13 zu einem zur Festlegung der Sollspannung des DC-DC-Wandlers 30 dienenden Stellsignal S0 zu addieren.

Im Folgenden wird die Funktionsweise der erfindungsgemäßen Stromsymmetrierungsschaltung 10 erläutert. Das Stellsignal S0 dient zur Regelung der Ausgangsspannung des DC-DC-Wandlers 30. Eine Möglichkeit zur Regelung der Ausgangsspannung ist die Pulsweitenmodulation (PWM). Dabei wirkt sich die Größe des Stellsignals S0 auf die Dauer der Einschaltzeit der Schalter 34 aus. Durch Toleranzen der verwendeten Bauteile stellen sich minimale Differenzen der in den einzelnen Phasen fließenden Ströme ein. Dies kann, insbesondere wenn die Induktivitäten 36 der einzelnen Phasen miteinander gekoppelt sind, zu einem Versagen des Wandlers führen. Um eine unsymmetrische Verteilung der Ströme auf die einzelnen Phasen zu verhindern, werden erfindungsgemäß die Differenzen der Halbbrückenausgangsspannungen der einzelnen Phasen und des am Sternpunkt S anliegenden Summenwerts der Halbbrückenausgangsspannungen der einzelnen Phasen gefiltert. Dadurch müssen bei einer sprunghaften Änderung der Sollspannung des DC-DC-Wandlers 30 die Kondensatoren 14 der Tiefpassfilter nicht auf die neuen Mittelwerte der Halbbrückenausgangsspannungen umgeladen werden, da die am Sternpunkt S anliegende Bezugsspannung sich aus den Halbbrückenausgangsspannungen zusammensetzt und sich daher automatisch mitändert. Mittels der Operationsverstärker 16 wird ein Signal S11, S12 oder S13 erzeugt, das zu der Differenz der mittleren Halbbrückenausgangsspannung der jeweiligen Phase und der am Sternpunkt anliegenden Bezugsspannung proportional ist. Dieses Differenzsignal S11, S12 oder S13 wird jeweils in einer Additionsschaltung 18 zu dem Stellsignal S0 hinzuaddiert. Dadurch wird das Stellsignal S0 für jede Phase entsprechend der Abweichung der mittleren Halbbrückenausgangsspannung dieser Phase von der am Sternpunkt S anliegenden Bezugsspannung modifiziert. Die modifizierten Stellsignale werden der Steuerschaltung 20 zugeführt, die daraus die Steuersignale S21 bis S26 zur Ansteuerung der Schalter 34 erzeugt.

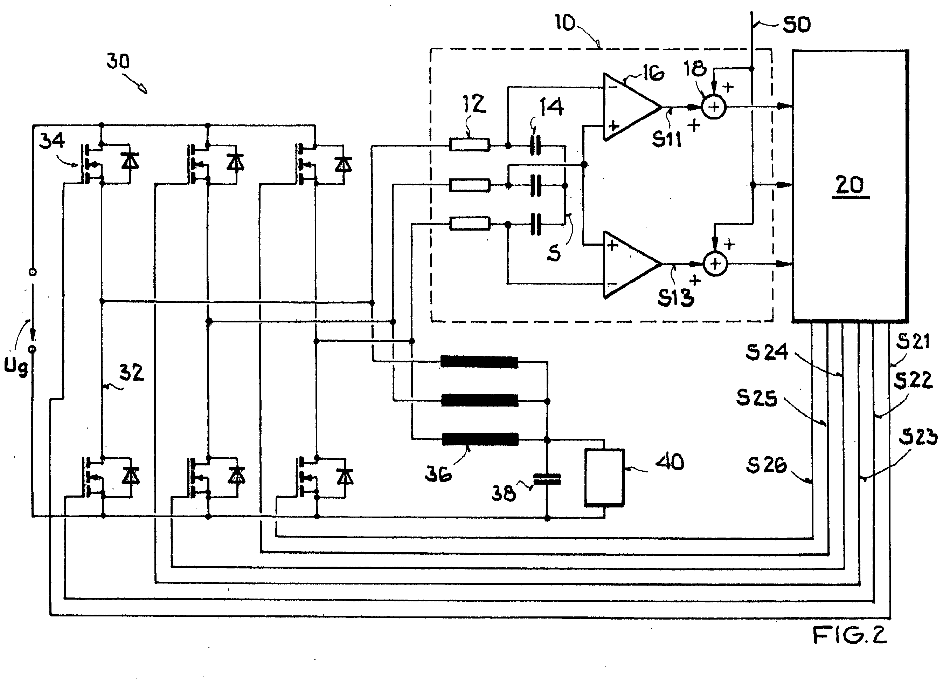

Fig. 2 zeigt ein weiteres Ausführungsbeispiel einer erfindungsgemäßen Stromsymmetrierungsschaltung 10 und einen DC-DC-Wandler 30, der von seinem Aufbau dem in Fig. 1 dargestellten Wandler entspricht. Die Stromsymmetrierungsschaltung 10 gemäß Fig. 2 umfasst auch aus jeweils einem Widerstand 12 und einem Kondensator 14 bestehende Tiefpassfilter, die jeweils an die Ausgänge der Halbbrücken 32 des Wandlers 30 angeschlossen sind. Wie bei dem ersten Ausführungsbeispiel sind auch hier die den Widerständen 12 abgewandten Elektroden der Kondensatoren 14 mit einem gemeinsamen Sternpunkt S verbunden. Das vorliegende Ausführungsbeispiel unterscheidet sich dadurch von dem vorhergehenden Ausführungsbeispiel, dass die Mittelwerte der Halbbrückenausgangsspannungen, die an den invertierenden Eingängen von Operationsverstärkern 16 anliegen, statt mit dem am Sternpunkt S anliegenden Summenwert der Halbbrückenausgangsspannungen mit dem Mittelwert der Halbbrückenausgangsspannung einer ausgewählten Phase verglichen werden. Dazu ist in dem bevorzugten Ausführungsbeispiel die gefilterte Ausgangsspannung der mittleren oder zweiten Phase mit dem nicht invertierenden Eingang der jeweiligen Operationsverstärker 16 verbunden. Der dieser Phase zugeordnete Operationsverstärker ist damit überflüssig und kann weggelassen werden. In Fig. 2 sind daher nur zwei Operationsverstärker dargestellt. Jeder dieser Operationsverstärker 16 erzeugt ein Differenzsignal S11 oder S13, das ein Maß für die Differenz der mittleren Ausgangsspannung der jeweiligen Halbbrücke und der mittleren Ausgangsspannung einer ausgewählten, in diesem Falle der mittleren oder zweiten Halbbrücke darstellt. Diese Differenzsignale S11 und S13 werden Additionsschaltungen 18 zugeführt, in denen sie dem zur Festlegung der Sollspannung des DC-DC-Wandlers 30 dienenden Stellsignal S0 hinzuaddiert werden. Für die mittlere oder zweite Phase, mit deren Spannung im vorliegenden Fall die Spannungen der übrigen Phasen verglichen werden, wird kein Differenzsignal erzeugt. Für diese Phase ist daher auch keine Additionsschaltung vorgesehen.

Die Funktionsweise der in Fig. 2 dargestellten Stromsymmetrierungsschaltung 10 unterscheidet sich von der der in Fig. 1 dargestellten Schaltung dadurch, dass statt des am Sternpunkt S anliegenden Summenwerts der Halbbrückenausgangsspannungen als Referenzwert der Mittelwert der Halbbrückenausgangsspannung einer ausgewählten Phase, im vorliegenden Fall der zweiten Phase, verwendet wird. Mittels zweier Operationsverstärker 16 wird ein Signal S11 oder S13 erzeugt, das zu der Differenz der mittleren Halbbrückenausgangsspannung der jeweiligen Phase und der mittleren Halbbrückenausgangsspannung der zweiten Phase proportional ist. Dieses Differenzsignal S11 oder S13 wird jeweils in einer Additionsschaltung 18 zu dem Stellsignal S0 hinzuaddiert, um dieses entsprechend der Abweichung der mittleren Halbbrückenausgangsspannung dieser Phase von der mittleren Halbbrückenausgangsspannung der zweiten Phase zu modifizieren. Für die zweite Phase wird kein Differenzsignal erzeugt, da dieses Null ergäbe. Für diese Phase wird statt des modifizierten Stellsignals direkt das Stellsignal S0 der Steuerschaltung 20 zugeführt.

## Patentansprüche

1. Stromsymmetrierungsschaltung (10) für ein mehrphasiges DC-DC-Wandlersystem (30) mit jeweils einem Tiefpassfilter (12, 14) für jede Phase des Wandlersystems (30) zur Filterung einer mit dieser Phase korrelierten Spannung, wobei jeder Tiefpassfilter (12, 14) mindestens einen Kondensator (14) aufweist, wobei jeweils eine Elektrode eines jeden Kondensators (14) mit einem gemeinsamen von Masse entkoppelten Sternpunkt (S) verbunden ist, um jeweils eine Differenz der Spannung der jeweiligen Phase und einer an dem Sternpunkt (S) anliegenden variablen Bezugsspannung zu filtern und die gefilterte Spannung für eine Stromsymmetrieregelung des DC-DC-Wandlersystems (30) zur Verfügung zu stellen,
**gekennzeichnet durch**
Mittel (16) zum Erzeugen eines Differenzsignals (S11 - S13) zumindest für jede Phase außer einer vorbestimmten Phase, dessen Wert zu der Differenz der mittleren Spannung der jeweiligen Phase und einer mittleren Spannung der vorbestimmten Phase proportional ist.

2. Stromsymmetrierungsschaltung (10) nach Anspruch 1,
**dadurch gekennzeichnet, dass**
es sich bei der variablen Bezugsspannung um einen aus den Spannungen der einzelnen Phasen gebildeten Summenwert handelt.

3. Stromsymmetrierungsschaltung (10) nach Anspruch 1, **gekennzeichnet durch**
Mittel (18) zum Addieren des Differenzsignals (S11 - S13) der jeweiligen Phase zu einem Stellsignal (SO) des DC-DC-Wandlersystems (30) für jede Phase des Wandlersystems (30), für die ein Differenzsignal (S11 - S13) vorliegt.

4. Stromsymmetrierungsschaltung (10) nach einem der vorausgehenden Ansprüche,
**dadurch gekennzeichnet, dass**
es sich bei dem Tiefpassfilter (12, 14) jeweils um einen Tiefpassfilter erster Ordnung, insbesondere ein RC-Glied, handelt.

5. DC-DC-Wandler (30) mit einer Stromsymmetrierungsschaltung (10) nach einem der vorausgehenden Ansprüche,
**dadurch gekennzeichnet, dass**
der DC-DC-Wandler (30) für jede Phase eine Schalteinrichtung (32) zum Variieren der DC-Eingangsspannung aufweist, wobei die einzelnen Schalteinrichtungen (32) parallel zueinander geschaltet sind und jeweils ein Tiefpassfilter (12, 14) der Stromsymmetrierungsschaltung (10) an eine Schalteinrichtung (32) angeschlossen ist.

6. DC-DC-Wandler (30) nach Anspruch 5,
**dadurch gekennzeichnet, dass**
es sich bei der Schalteinrichtung um eine Halbbrücke (32) handelt, und der DC-DC-Wandler (30) außerdem für jede Phase eine Induktivität (36) aufweist, die an einen Ausgang der jeweiligen Halbbrücke (32) angeschlossen ist.

7. DC-DC-Wandler (30) nach Anspruch 5 oder 6,
**dadurch gekennzeichnet, dass**
die Induktivitäten (36) der einzelnen Phasen miteinander gekoppelt sind.

8. DC-DC-Wandler (30) nach einem der Ansprüche 5 bis 7,
**gekennzeichnet durch**
eine Steuereinrichtung (20) zur Ansteuerung der Schalteinrichtungen (32) in Abhängigkeit von einem mittels der gefilterten Spannung modifizierten Stellsignal (S0).

9. Verfahren zur Symmetrierung der Phasenströme eines mehrphasigen DC-DC-Wandlersystems (30) mit folgenden Schritten:
- Filtern einer Differenz der Spannung einer jeden Phase des Wandlersystems (30) und einer an einem Sternpunkt (S) anliegenden variablen Bezugsspannung mittels jeweils eines Tiefpassfilters (12, 14);
- Bereitstellen der gefilterten Spannung für eine Stromsymmetrieregelung des DC-DC-Wandlersystems (30); und
- Erzeugen eines Differenzsignals (S11 - S13) zumindest für jede Phase außer einer vorbestimmten Phase, dessen Wert zu der Differenz der mittleren Spannung der jeweiligen Phase und einer mittleren Spannung der vorbestimmten Phase proportional ist.

## Claims

1. Current balancing circuit (10) for a multi-phase DC-DC converter system (30) having a low-pass filter (12, 14) for each phase of the converter system (30) for filtering a voltage which is correlated with this phase, wherein each low-pass filter (12, 14) has at least one capacitor (14), wherein an electrode of each capacitor (14) is connected to a common neutral point (S) which is decoupled from the earth in order in each case to filter a difference in respect of the voltage of the respective phase and a variable reference voltage which is applied at the neutral point (S) and to provide the filtered voltage for a current balancing control of the DC-DC converter system (30),
**characterised by**
means (16) for producing a differential signal (S11-S13) at least for each phase except for a predetermined phase whose value is proportional to the difference in respect of the mean voltage of the respective phase and a mean voltage of the predetermined phase.

2. Current balancing circuit (10) according to claim 1,
**characterised in that**
the variable reference voltage is a total value which is formed from the voltages of the individual phases.

3. Current balancing circuit (10) according to claim 1,
**characterised by**
means (18) for adding the differential signal (S11-S13) of the respective phase to an actuation signal (SO) of the DC-DC converter system (30) for each phase of the converter system (30) for which a differential signal (S11-S13) is present.

4. Current balancing circuit (10) according to any one of the preceding claims,
**characterised in that**
the low-pass filter (12, 14) is in each case a low-pass filter of the first order, in particular an RC member.

5. DC-DC converter (30) having a current balancing circuit (10) according to any one of the preceding claims,
**characterised In that**
the DC-DC converter (30) has for each phase a switching device (32) for varying the DC input voltage, wherein the individual switching devices (32) are connected in parallel with each other and in each case a low-pass filter (12, 14) of the current balancing circuit (10) is connected to a switching device (32).

6. DC-DC converter (30) according to claim 5,
**characterised in that**
the switching device is a half-bridge (32) and the DC-DC converter (30) further has for each phase an inductance (36) which is connected to an output of the respective half-bridge (32).

7. DC-DC converter (30) according to claim 5 or 6,
**characterised in that**
the inductances (36) of the individual phases are coupled to each other.

8. DC-DC converter (30) according to any one of claims 5 to 7,
**characterised by**
a control device (20) for controlling the switching devices (32) in accordance with an actuation signal (SO) which is modified by means of the filtered voltage.

9. Method for balancing the phase currents of a multi-phase DC-DC converter system (30) having the following steps:
- filtering a difference of the voltage of each phase of the converter system (30) and a variable reference voltage which is applied at a neutral point (S) by means of a low-pass filter (12, 14) in each case;
- providing the filtered voltage for a current balancing control of the DC-DC converter system (30); and
- producing a differential signal (S11-S13) at least for each phase except for a predetermined phase whose value is proportional to the difference of the mean voltage of the respective phase and a mean voltage of the predetermined phase.

## Revendications

1. Circuit symétriseur de courant (10) pour un système convertisseur DC-DC polyphasé (30) avec à chaque fois un filtre passe-bas (12, 14) pour chaque phase du système convertisseur (30) afin de filtrer une tension corrélée à cette phase, dans lequel chaque filtre passe-bas (12, 14) comporte au moins un condensateur (14), dans lequel à chaque fois une électrode de chaque condensateur (14) est reliée à un point neutre (S) commun découplé de la masse pour filtrer à chaque fois une différence de la tension de la phase respective et d'une tension de référence variable présente au point neutre (S) et pour mettre à disposition la tension filtrée pour une régulation de symétrie de courant du système convertisseur DC-DC (30),
**caractérisé par** des moyens (16) destinés à produire un signal de différence (S11 à S13) au moins pour chaque phase hormis une phase prédéterminée, signal de différence dont la valeur est proportionnelle à la différence de la tension moyenne de la phase respective et d'une tension moyenne de la phase prédéterminée.

2. Circuit symétriseur de courant (10) selon la revendication 1, **caractérisé en ce que** la tension de référence variable est une valeur cumulée formée des tensions des phases individuelles.

3. Circuit symétriseur de courant (10) selon la revendication 1, **caractérisé par** des moyens (18) destinés à additionner le signal de différence (S11 à S13) de la phase respective à un signal de réglage (S0) du système convertisseur DC-DC polyphasé (30) pour chaque phase du système convertisseur (30) pour laquelle un signal de différence (S11 à S13) existe.

4. Circuit symétriseur de courant (10) selon l'une des revendications précédentes, **caractérisé en ce que** le filtre passe-bas (12, 14) est à chaque fois un filtre passe-bas de premier ordre, en particulier un circuit RC.

5. Convertisseur DC-DC (30) avec un circuit symétriseur de courant (10) selon l'une des revendications précédentes, **caractérisé en ce que** le convertisseur DC-DC (30) comporte pour chaque phase un commutateur (32) en vue de la variation de la tension d'entrée DC, les commutateurs individuels (32) étant branchés en parallèle et à chaque fois un filtre passe-bas (12, 14) du circuit symétriseur de courant (10) étant raccordé à un commutateur (32).

6. Convertisseur DC-DC (30) selon la revendication 5, **caractérisé en ce que** le commutateur est un demi-pont (32) et le convertisseur DC-DC (30) comporte en outre pour chaque phase une inductance (36) qui est raccordée à une sortie du demi-pont (32) respectif.

7. Convertisseur DC-DC (30) selon la revendication 5 ou 6, **caractérisé en ce que** les inductances (36) des phases individuelles sont couplées ensemble.

8. Convertisseur DC-DC (30) selon l'une des revendications 5 à 7, **caractérisé par** un dispositif de commande (20) destiné à commander les commutateurs (32) en fonction d'un signal de réglage (S0) modifié au moyen de la tension filtrée.

9. Procédé de symétrisation des courants de phases d'un système convertisseur DC-DC polyphasé (30) avec les étapes suivantes :
- filtrer une différence de la tension de chaque phase du système convertisseur (30) et d'une tension de référence variable présente à un point neutre (S) au moyen d'un filtre passe-bas (12, 14) à chaque fois ;
- mettre à disposition la tension filtrée pour une régulation de symétrie de courant du système convertisseur DC-DC (30) ; et
- produire un signal de différence (S11 à S13) au moins pour chaque phase hormis une phase prédéterminée, signal de différence dont la valeur est proportionnelle à la différence de la tension moyenne de la phase respective et d'une tension moyenne de la phase prédéterminée.
